# FASCICULE DE BREVET EUROPEEN

(11) **EP 2 382 083 B1**
(45) Date de publication et mention de la délivrance du brevet: **26.02.2014**
(21) Numéro de dépôt: 09771365.5
(22) Date de dépôt: 11.12.2009
(51) Int. Cl.: B29D 30/42, B29D 30/46

(54) **DISPOSITIF DE TRANSFERT ET D'ALIGNEMENT DE BANDELETTES DESTINEES A ETRE ASSEMBLEES POUR FORMER UNE NAPPE**
VORRICHTUNG ZUR ÜBERTRAGUNG UND AUSRICHTUNG VON ZUR BILDUNG EINER LAGE ZUSAMMENZUFÜGENDEN STREIFEN.
DEVICE FOR TRANSFERRING AND ALIGNING STRIPS INTENDED TO BE ASSEMBLED TO FORM A PLY.

(30) Priorité: 12.12.2008 FR 0858524
(43) Date de publication de la demande: 02.11.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DRUET, Michel, F-63122 Ceyrat (FR); LAUPER, Jacques, F-63800 Cournon d'Auvergne (FR); JAUNET, Nicolas, F-63119 Chateaugay (FR); BUVAT, Gérard, F-63200 Marsat (FR); FILIOL, Antoine, F-63670 La Roche Blanche (FR); MARTIN, Pascal, F-63730 Corent (FR)
(74) Mandataire: Reynaud, Georges
(86) Numéro de dépôt international: PCT/EP2009/066981
(87) Numéro de publication internationale: WO 2010/066895

(56) Documents cités:
- EP-A1- 0 958 913
- JP-A- 7 227 919
- US-A- 4 409 872
- US-A- 4 411 724
- US-A- 4 769 104
- US-A- 5 092 946

## Description

Le domaine de l'invention concerne la fabrication des nappes de renfort destinées à être utilisées dans l'assemblage des pneumatiques.

Les nappes de renfort d'un pneumatique sont constituées en règle générale de fils de renfort d'une longueur donnée, enrobés dans un mélange de caoutchouc, parallèles entre eux et faisant un angle donné avec la direction longitudinale de ladite nappe.

Ces nappes sont obtenues à partir de nappes dites droit fils dans lesquelles les fils de renfort sont parallèles à la direction longitudinale de la nappe droit fil. A l'aide d'un moyen de coupe on prélève des tronçons de nappes dans la nappe droit fil selon un angle de coupe donné, et on met aboute lesdites portions de nappe droit fil par leurs lisières respectives pour former une nappe à angle ou nappe de renfort.

L'invention concerne plus particulièrement les nappes de renfort comprenant des fils de renfort métalliques.

De nombreux dispositifs ont été développés dans l'industrie pour réaliser des nappes de renfort présentant les caractéristiques géométriques les plus proches des cahiers des charges établis pour la réalisation des pneumatiques.

Les dispositifs de coupes les plus connus, fonctionnent en règle générale de manière centralisée, et alimentent plusieurs machines d'assemblage en bandes de renfort continues. Les machines d'assemblage comportent alors des moyens aptes à prélever des tronçons de longueur déterminée formant lesdites nappes de renfort. Aussi, pour optimiser la production de ces machines, on s'arrange pour avoir des nappes droit fils de grande largeur.

De manière alternative, il est également connu de réaliser les nappes de renfort directement en amont de la machine d'assemblage. Selon ce mode de réalisation, la nappe de renfort est construite à l'aide de bandelettes coupées à angle, prélevées dans une nappe droit fil se présentant sous la forme d'un bande de faible largeur. Les bandelettes sont assemblées les unes aux autres par leurs lisières. En pratique, la bande droit fil et les bandelettes ont une largeur comprise entre 10 et 25 mm.

Un dispositif de ce type permet de réaliser la nappe de renfort à la longueur désirée en déterminant de manière judicieuse le nombre de bandelettes à juxtaposer.

A titre d'exemple, la publication US 3 682 222 permet de se faire une idée plus précise du dispositif d'assemblage de bandelettes en question, lequel comprend un premier moyen pour délivrer la bande droit fil de faible largeur, un moyen de coupe pour détacher un tronçon de bande de la bande droit fil, un moyen de manutention alternatif pour amener ledit tronçon de bande droit fil de longueur donnée préalablement coupée à angle selon un angle donné vers un tapis d'assemblage, et un moyen d'assemblage permettant de souder les tronçons de bandes les unes aux autres par leurs lisières respectives.

La publication US 4 411 724 concerne également un moyen d'assemblage de bandes prélevées dans une nappe droit fil comprenant un moyen de transfert entre un dispositif de coupe et un tapis d'assemblage dans lequel la bande est maintenue plaquée par des moyens magnétiques. Toutefois, le transfert de la bande d'un tapis à un autre comporte des zones de libre parcours dans lesquelles la bande n'est pas maintenue par lesdits moyens magnétiques, ce qui autorise les mouvements parasites de la bande par rapport au référentiel machine.

L'invention concerne un perfectionnement d'un dispositif d'assemblage de bandelettes tels que décrit ci-dessus.

Le problème posé par ce type de machine concerne la conservation des caractéristiques géométriques de la bande et de la bandelette une fois que cette dernière a été prélevée de la bande continue, pendant toutes les phases de transfert, de mise à longueur, de coupe, et d'assemblage. En effet, la bandelette, du fait de sa faible largeur, est sujette à des déformations et à des mouvements parasites susceptibles d'altérer la qualité géométrique de la nappe de renfort. Il importe donc que, à tout moment, la bande ou la bandelette soient maintenues en référence, par rapport au référentiel géométrique de la machine considéré comme connu et maîtrisable.

La publication EP 958 913, cherche à apporter des éléments de réponse à cette problématique et propose un perfectionnement dans lequel des parois d'alignement mobiles disposées de chaque coté de la bandelette servent de guide pour aligner les lisières avant et arrière de la bandelette de manière aussi précise que possible. L'espacement entre les parois est sensiblement égal à la largeur de la bandelette.

Ce dispositif manque toutefois à prévenir les vrillages de la bande, susceptibles d'altérer la géométrie des lisières en contact avec lesdites parois d'alignement.

Le dispositif de fabrication de nappe de renfort par assemblage de tronçons de bande juxtaposés les uns aux autres par leurs lisières respectives comme défini dans la revendication 1, selon l'invention, comprend :
- un moyen d'alimentation pour délivrer une bande droit fil formée de fils métalliques parallèles entre eux et enrobés dans un mélange de caoutchouc,
- un tapis d'assemblage,
- un moyen de transfert pour amener sur le tapis d'assemblage depuis le moyen d'alimentation une longueur donnée de bande droit fil selon une direction faisant un angle donné avec la direction longitudinale du tapis d'assemblage, et comprenant une paroi de maintien, parallèle aux plans du tapis d'assemblage et du moyen d'alimentation, et dont une première face est destinée à entrer en contact avec la surface de la bande,
- un moyen de coupe pour détacher un tronçon de bande de la bande droit fil, dans lequel le moyen d'alimentation, le moyen de transfert et le tapis d'assemblage sont dotés de moyens magnétiques aptes à maintenir ladite bande plaquée sur la surface respectivement du moyen d'alimentation, de la première face du moyen de transfert et du tapis d'assemblage,

Ce dispositif se caractérise en ce que la paroi de maintien est mobile selon un mouvement de monte et baisse et de va et vient par rapport aux plans formés par le tapis d'assemblage et le moyen d'alimentation, et que les moyens magnétiques du moyen de transfert sont mobiles par rapport à la paroi de maintien selon une direction perpendiculaire au plan formé par ladite paroi de maintien entre une position haute et une position basse, et sont ajustés de sorte que, lorsque le dispositif est en fonctionnement :
- en position basse, lesdits moyens magnétiques du moyen de transfert exercent au niveau des fils métalliques de la bande, un champ magnétique d'une valeur supérieure au champ magnétique exercé par les moyens magnétiques disposés sur le moyen d'alimentation, lorsque les deux faces opposées de la bande sont simultanément en contact avec la première face de la paroi de maintien d'une part et, avec la surface (320) du moyen d'alimentation d'autre part et que,
- en position haute, lesdits moyens magnétiques du moyen de transfert exercent au niveau des fils métalliques de la bande un champ magnétique d'une valeur inférieure au champ magnétique exercé par les moyens magnétiques disposés sur le tapis d'assemblage, lorsque les deux faces opposées de la bande sont simultanément en contact avec la première face de ladite paroi de maintien d'une part et avec la surface du tapis d'assemblage d'autre part.

Il en résulte que la bande de produit est toujours en contact avec au moins un élément mécanique dont le positionnement dans l'espace est connu et maîtrisable. En effet, la bande de produit est d'abord maintenue par la surface du moyen d'alimentation, puis simultanément par la surface du moyen d'alimentation et la paroi de maintien du moyen de transfert, puis par la paroi de maintien du moyen de transfert seule, puis simultanément par la paroi de maintien du moyen de transfert et la surface du tapis d'assemblage, et enfin par la surface du tapis d'assemblage seul. Cette succession d'opération a pour objet de maintenir le produit "en référence".

L'effet technique produit par cette caractéristique particulière est que, à aucun moment du cycle de transfert, la bande est de libre parcours. Ceci permet de résoudre le problème technique lié au maintien de la bande en référence par une surface aimantée dans le référentiel géométrique de la machine, seul moyen de garantir la précision de pose de la bande sur le pneumatique, en aval du tapis d'assemblage.

On pourrait obtenir un résultat similaire en s'arrangeant pour que le champ magnétique exercé par les moyens magnétiques disposés sur le moyen d'alimentation soient inférieurs au champ magnétique exercé par les moyens magnétiques disposés sur le moyen de transfert, ce dernier champ étant lui-même inférieur au champ magnétique exercé par le tapis d'assemblage. Les champs magnétiques des différents moyens pourraient alors avoir des valeurs constantes. Cette solution présente toutefois l'inconvénient de nécessiter des moyens magnétiques de puissance croissante, peu compatibles avec les matériels industriels couramment en usage dans les ateliers de fabrication.

L'intérêt de la solution originale proposé par l'invention, selon laquelle le moyen magnétique disposé sur le moyen de transfert génère un champ magnétique ajustable, est de permettre l'utilisation de moyens magnétiques de faible puissance installés respectivement sur le moyen d'alimentation et sur le tapis d'assemblage.

Il suffit alors de faire varier la valeur du champ magnétique du moyen magnétique disposé sur le moyen de transfert d'une valeur supérieure à la valeur du champ magnétique exercé sur la bande par le moyen magnétique disposé sur le moyen d'alimentation pour saisir la bande, et d'une valeur inférieure à la valeur du champ magnétique exercé sur la bande par le moyen magnétique disposé sur le tapis d'alimentation pour y déposer la bande.

La présente invention se réfère aussi à un procédé de fabrication d'une nappe de renfort pour pneumatiques, le procédé étant défini dans la revendication 10.

De formes préférentielles de invention sont définies dans les revendications dépendantes.

La description qui suit s'appuie sur un mode préférentiel de réalisation de l'invention, et sur les figures 1 à 9 dans lesquelles :
- la figure 1 représente une vue schématique en perspective d'un dispositif selon l'invention,
- la figure 2 représente une vue de dessus dudit dispositif,
- les figures 3 à 9, représentent des vues schématiques en perspective des différentes étapes de mise en oeuvre du dispositif.

La bande B est une bande continue formée de fils métalliques continus, enrobés dudit mélange de caoutchouc, parallèles entre eux et orientés selon la direction longitudinale de la bande.

La nappe N de renfort à réaliser à l'aide du dispositif est formée par des tronçons de fils métalliques de longueur donnée, enrobés d'un mélange de caoutchouc, parallèles entre eux, et faisant un angle α avec la direction longitudinale XX'. Plus précisément, cette nappe N est constituée par l'assemblage d'un nombre entier de tronçons de bande prélevés dans la bande B, et assemblés par leurs lisières respectives. A chaque cycle du dispositif de fabrication, on dispose un tronçon de bande sur le tapis d'assemblage.

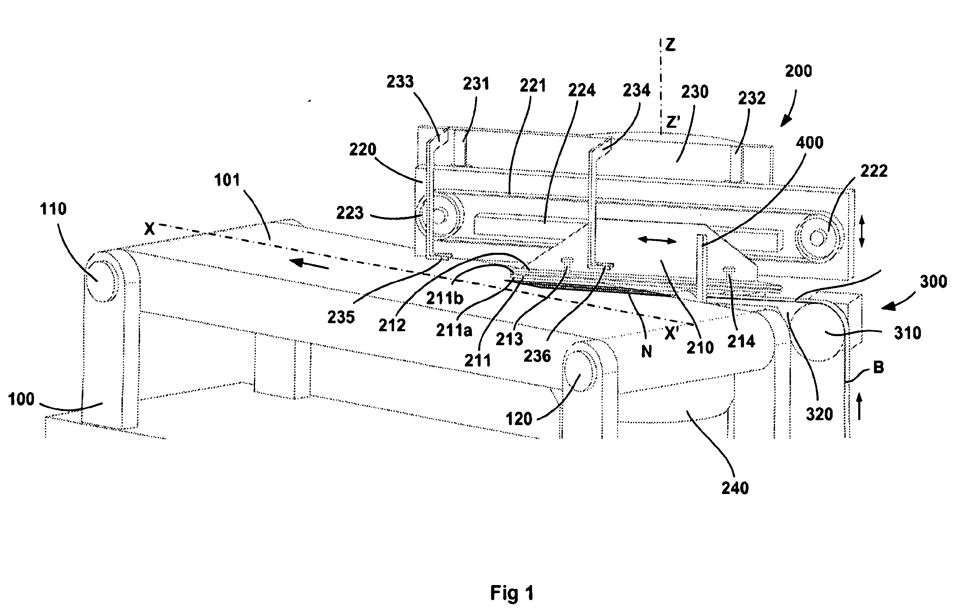

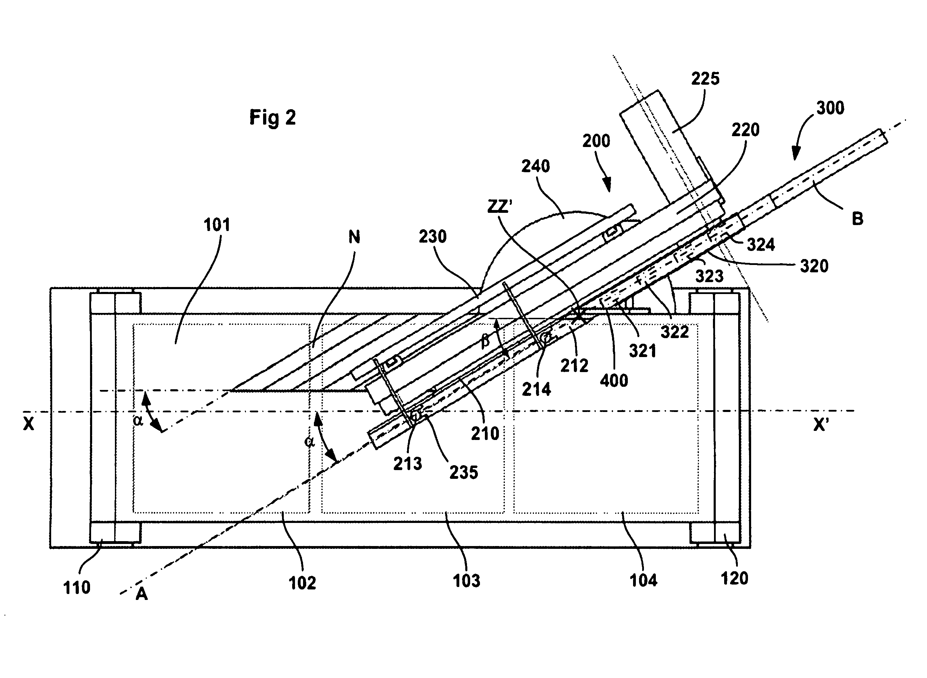

Le dispositif de fabrication de nappes de renfort illustré par les figures 1 et 2 comprend un bâti 100 supportant un tapis d'assemblage 101, circulant entre deux rouleaux 110 et 120. Un des rouleaux est entraîné en rotation par un moteur (non représenté) de manière à permettre la circulation du tapis selon une direction longitudinale XX' représentée par une flèche. A chaque cycle de fabrication, le tapis d'assemblage avance d'un pas d'une longueur déterminée.

Des moyens magnétiques 102, 103, 104 sont disposés sous la surface du tapis d'assemblage 101, et exercent un champ magnétique sur les fils métalliques de lanappe N disposée sur la surface dudit tapis d'assemblage. La valeur de ce champ est déterminée de manière connue, de sorte que la nappe soit fermement plaquée contre la surface du tapis d'une part, tout en permettant d'autre part la circulation du tapis sans frottements excessifs.

Le moyen d'alimentation 300, comprend des moyens de stockage et de déroulement (non représentés) permettant d'amener à la demande une longueur donnée de bande B, un rouleau d'alimentation 310, et un patin de lancement 320 sur lequel la bande B est amenée à glisser.

Le plan formé par la surface du patin de lancement 320 est sensiblement parallèle au plan formé par la surface supérieure du tapis d'assemblage 101. Pour des raisons de commodité on s'arrange également pour que la surface du tapis d'assemblage 101, et la surface du patin de lancement 320 soient situées dans un même plan.

Des moyens magnétiques 321, 322, 323, 324 sont disposés sous la surface du patin de lancement 320 et exercent sur la bande B un champ magnétique. Ce champ magnétique a pour effet de plaquer la bande contre la surface du patin de lancement et de créer un frottement s'opposant aux mouvements latéraux de la bande lorsque cette dernière est entraînée selon l'axe AA' vers le tapis d'assemblage. La direction AA' est parallèle au plan du tapis d'assemblage et fait un angle α donné avec la direction XX'.

Le moyen de transfert 200 ainsi que le moyen d'alimentation 300, sont montés sur une tourelle 240 disposée sur le bâti 100. La tourelle est mobile en rotation autour d'un axe ZZ', perpendiculaire au plan du tapis d'assemblage 101. On modifie l'angle α en faisant tourner la tourelle 240 autour de son axe ZZ'. L'angle α correspond à l'angle formé par la direction des fils de la bande avec la direction longitudinale XX' de la nappe à fabriquer.

On s'arrange, pour que la chemin de circulation de la bande dans le moyen d'alimentation soit parfaitement aligné avec le chemin de circulation de la bande dans le moyen de transfert, ces chemins étant confondus avec la direction AA'.

Le moyen de transfert 200 comprend un premier châssis 230, solidaire de la tourelle 240 Ce châssis supporte deux glissières 231 et 232, orientées dans la direction ZZ'.

Un deuxième châssis 220 est monté coulissant sur les deux glissières 231 et 232. Le châssis 220 effectue des mouvements de monte et baisse par rapport au plan du tapis 101 et du patin de lancement 320 sous l'action d'un moteur d'entraînement (non représenté).

Le deuxième châssis 220 supporte à son tour une glissière 224 orientée selon la direction AA'.

Un cadre de transfert 210, coulisse sur la glissière 224 sous l'action d'une bande d'entraînement 221 circulant entre deux galets 222 et 223. Un des galets est entraîné en rotation par un moteur 225 de sorte que le cadre de transfert effectue des mouvements de va et vient entre une première position située au droit du patin de lancement 320 et une seconde position située au droit du tapis d'assemblage 101.

De cette manière, le cadre de transfert effectue à la demande, un mouvement alternatif de monte et baisse par rapport à la surface du tapis 101 ou du patin de lancement 320, et un mouvement alternatif de va et vient dans la direction AA'.

Le cadre de transfert comporte sur sa partie inférieure une paroi de maintien 211 située dans un plan parallèle aux plans formés par la surface du tapis d'assemblage et par la surface du patin de lancement. La paroi de maintien 211 comprend une première face 211a faisant face à la surface du tapis d'assemblage 101, et à la surface du patin de lancement 320. La seconde face 211 b de la paroi de maintien, opposée à la première face 211a, supporte les moyens magnétiques 212 aptes à exercer un champ magnétique variable par rapport à ladite première face 211a de ladite paroi de maintien 211.

Dans le cas d'espèce, lesdits moyens magnétiques sont formés par une plaque aimantée 212 comprenant des aimants permanents de type Néodyne fer-bore. De préférence, la paroi de maintien 211 sera réalisée dans un matériau non magnétique de manière à ne pas bloquer les champs induits par la plaque aimantée 212.

Les extrémités de la plaque aimantée 212 et de la paroi de maintien 211 placées du coté du moyen d'alimentation font un angle β avec la direction XX'. Dans l'idéal, l'angle β devrait être égal à l'angle α. Toutefois cela imposerait de faire varier cet angle β pour chaque angle α. Aussi, dans la pratique, on détermine une valeur moyenne et fixée une fois pour toute de cet angle β en fonction de la valeur des angles des nappes à fabriquer à l'aide du dispositif selon l'invention.

La plaque 212 est disposée du coté de la deuxième face 211 b de la paroi de maintien 211 sur laquelle elle repose. Cette plaque comporte des moyens d'accroche 213 et 214.

Des moyens de relevage 233 et 234 sont fixés sur le châssis 230. Ces moyens de relevage comportent à leur extrémité des fourchettes, respectivement 235 et 236, aptes à coopérer avec lesdits moyens d'accroche 213 et 214, de manière à ce que, lorsque lesdits moyens d'accroche 213 et 214 sont engagés dans lesdites fourchettes, respectivement 235 et 236, le mouvement du cadre de transfert 210 dans la direction ZZ' a pour effet d'éloigner ou de rapprocher ladite plaque aimantée 212 de la seconde face 211b de la paroi de maintien 211.

Il en résulte une variation du champ magnétique au niveau de la première face 211 a de la paroi de maintien 211.

On s'arrange alors pour que les aimants de la plaque aimantée 212 soient aptes à exercer sur les fils métalliques de la bande, un champ magnétique d'une valeur très supérieure au champ magnétique exercé par les moyens magnétiques 321, 322, 323, 324 disposés sous la surface du patin de lancement 320, lorsque les deux faces opposées de la bande sont simultanément en contact avec la première face 211a de la paroi de maintien 211 d'une part et, avec la surface du patin de lancement 320 d'autre part.

Ainsi, lorsque la bande B circule sur une de ses face sur la surface du patin de lancement 320 et que la paroi de maintien vient au contact de l'autre face de ladite bande, il suffit de rapprocher la plaque aimantée 212 de la seconde face 211 b de la paroi de maintien 211 pour faire adhérer la bande B sur la première face 211a de la paroi de maintien. On procèdera de la sorte pour venir prélever l'extrémité de la bande B sur le patin de lancement 320 à l'aide du moyen de transfert 200.

A contrario, lorsque la paroi de maintien 211 presse la bande B contre la surface du tapis d'assemblage 101, il suffit d'éloigner la plaque aimantée 212 de la seconde face 211b pour réduire le champ magnétique tendant à plaquer la bande B sur la première face 211 a, à une valeur très inférieure à la valeur du champ exercé sur les fils métalliques de la bande par les moyens magnétiques 102, 103 et 104 disposés sous la surface du tapis d'assemblage 101. Cette procédure sera utilisée pour déposer la bande sur le tapis d'assemblage 101.

L'utilisation d'un champ magnétique variable disposé sur le moyen de transfert, rend possible le choix de moyens magnétiques exerçant des champs de valeurs modeste et sensiblement identiques à la surface du patin de lancement 320 et à la surface du tapis d'assemblage 101. Cette solution permet de réduire la puissance des champs magnétiques au juste nécessaire requis pour exercer la fonction de maintien de la bande.

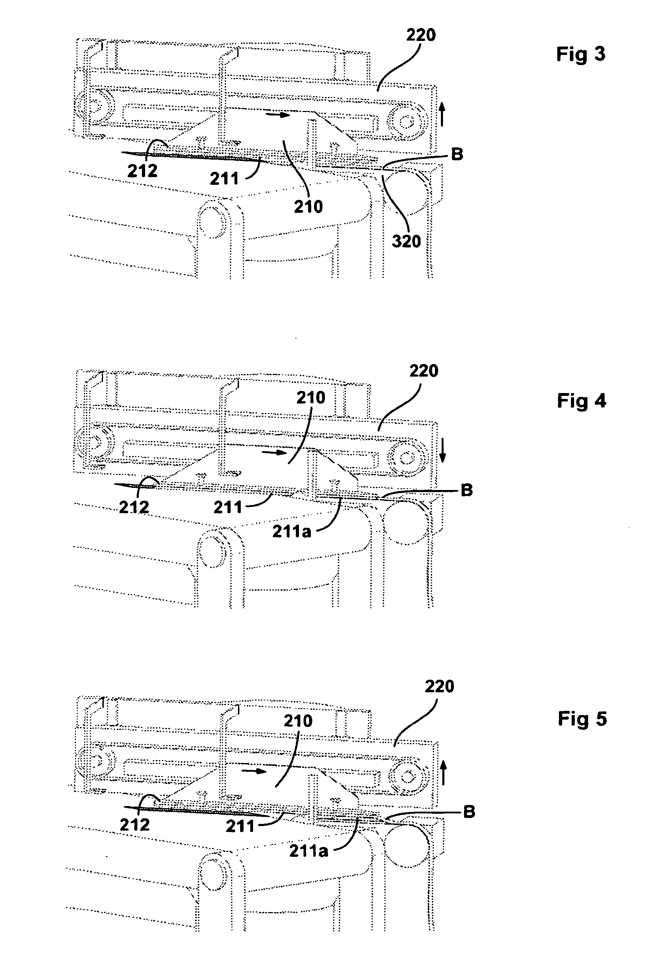

Les différentes étapes d'un cycle de fonctionnement du dispositif sont illustrées par les figures 3 à 9.

En préalable à la mise en route du dispositif il convient de déterminer les paramètres de fonctionnement à savoir, l'angle α, le nombre entier de tronçons de bande à assembler, le pas d'avance du tapis d'assemblage en fin de cycle, et la longueur des tronçons de bande à découper en fonction de l'angle et de la longueur de la nappe de renfort à obtenir, de la largeur de la nappe ou de la longueur des fils de la nappe, et de la largeur connue et constante de la bande B.

Les méthodes permettant de calculer ce nombre entier de tronçons de bande à assembler sont connues et consistent :
- soit, à faire varier légèrement la distance entre les lisières destinées à se juxtaposer de deux tronçons de bande successifs, en jouant sur la valeur du pas du tapis d'assemblage à la fin de chaque cycle de pose d'un tronçon de bande sur ledit tapis d'assemblage, comme cela est décrit dans la publication EP 1 095 761 ; la valeur de l'angle α est alors égale à la valeur de l'angle théorique, mais la densité de fil de la nappe de renfort est légèrement modifiée par rapport à la valeur théorique recherchée,
- soit à modifier légèrement la valeur de l'angle des fils de la nappe par rapport à l'angle théorique recherché, tout en maintenant la valeur du pas du tapis d'assemblage à une valeur permettant de juxtaposer les lisières des tronçons de nappe sans écart entre les fils, comme cela est proposé dans la publication EP 958 913 ; la densité de fils correspond alors à la densité recherchée.

On fait tourner alors la tourelle 240 de manière à obtenir l'angle α désiré selon l'une ou l'autre méthode.

La figure 3 représente la première étape du cycle dans laquelle le deuxième châssis 220 est placé en position haute, et le cadre de transfert 210 est disposé au droit du patin de lancement 320. La plaque aimantée 212 repose contre la seconde face 211 b de la paroi de maintien 211. L'extrémité de la bande B est maintenue plaquée par sa face inférieure contre la surface du patin de lancement par les aimants 321, 322, 323, 324.

On abaisse alors le deuxième châssis 220 de manière à amener la première face 221 a de la paroi de maintien 221 au contact de la face supérieure de l'extrémité de la bande B. La plaque aimantée 212 reste en contact avec la deuxième face 211 b de la paroi de maintien 211. L'extrémité de la bande B est alors attirée contre la première face 211 a de la paroi de maintien 211 comme cela est illustré à la figure 4.

A l'étape suivante, illustrée par la figure 5, on relève le deuxième châssis 220 tout en maintenant la plaque aimantée 212 en contact avec la deuxième face 211 b de la paroi de maintien 211. L'extrémité de la bande est maintenue plaquée contre la face 211a de la paroi de maintien 211.

On fera observer que, pour assurer le maintien de la bande dans les références de la machine, il est avantageux de faire en sorte que la paroi de maintien 211 recouvre le tronçon de bande sur la totalité de sa surface.

Le deuxième châssis 220 restant en position haute, on déplace le cadre de transfert et on entraîne l'extrémité de la bande au droit du tapis d'assemblage 101. La plaque aimantée 212 est maintenue en contact avec la deuxième face 211 b de la paroi de maintien 211, ce qui maintien l'extrémité de la bande plaquée contre la première face 211a de la paroi de maintien 211. La longueur de ce déplacement correspond à la longueur du tronçon de bande désiré et à la longueur des fils de la nappe N.

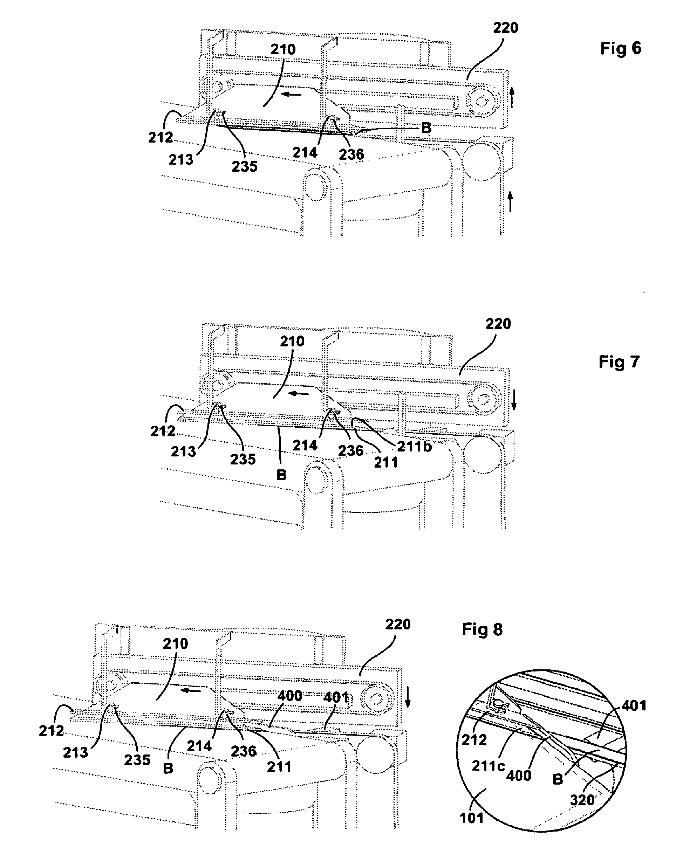

Pendant que la bande est entraînée dans la direction AA' par le moyen de transfert et glisse sur le patin de lancement 320, on active le moyen d'alimentation pour délivrer une longueur correspondante de bande. Durant ce mouvement, la bande est maintenue plaquée à la surface du patin de lancement par les moyens magnétiques 321, 322, 323, 324 disposés sous sa surface. La figure 6 illustre la position des organes respectifs à l'issue de cette étape.

On observe que les moyens d'accroche 213 et 214 sont engagés dans les fourchettes 235 et 236 disposées en extrémité des moyens de relevage 233 et 234.

L'étape suivante est illustrée à la figure 7 au cours de laquelle on abaisse le deuxième châssis 220. Ce mouvement permet de déposer l'extrémité de la bande sur la surface du tapis d'assemblage 101. La plaque aimantée 212 reste maintenue en position haute par les fourchettes 235 et 236, ce qui a pour effet d'éloigner ladite plaque aimantée 212 de la deuxième face 211b de la paroi de maintien 211. Il en résulte une diminution importante du champ magnétique au niveau de la première paroi 211a.

On active alors le couteau rotatif, comme cela est illustré à la figure 8, pour extraire un tronçon de bande. Pendant le sectionnement de la bande, la paroi de maintien 211 exerce une légère pression de manière à contenir fermement l'extrémité de la bande entre la deuxième face 211 a de la paroi de maintien et la surface du tapis 101.

Le bord du tapis 101 comporte à cet emplacement une pièce de renfort (non représentée). L'extrémité 211c de la paroi de maintien 211, en collaboration avec ladite pièce de renfort, fait alors office de contre lame, comme cela est illustré dans le médaillon de la figure 8, de manière à assurer une coupe parfaite de la bande.

La pression exercée par la paroi de maintien 211 sur la surface du tronçon de bande permet également d'établir la jonction entre la lisière arrière de la bande N et la lisière avant du tronçon de bande fraîchement déposé sur le tapis d'assemblage. Le sens avant s'entendant comme le sens de progression du tapis d'assemblage le long de la direction XX'.

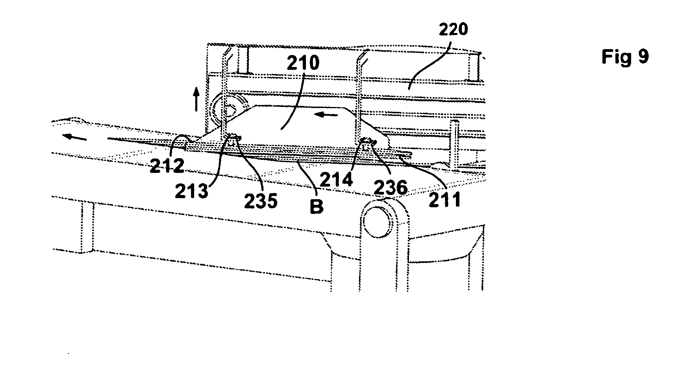

Au cours de la dernière étape du cycle, illustrée à la figure 9, on relève le deuxième châssis 220. La valeur du champ magnétique exercé par la plaque aimantée 212 au niveau de la deuxième face 211a de la paroi de maintien 211 étant très inférieure à la valeur du champ exercé par les moyens magnétiques 102, 103 et 104 disposés sous la surface du tapis, le tronçon de bande reste plaqué à la surface du tapis d'assemblage 101. A l'issue de cette étape, la plaque aimantée est remise en contact avec la paroi de maintien. Le tapis est avancé d'un pas donné, dont la valeur est égale à la largeur de la bande multipliée par l'inverse du sinus de l'angle α.

La description ci-dessus est fondée sur un dispositif particulier correspondant à la mise en oeuvre de l'invention telle que revendiquée.

Il convient de faire remarquer que ce mode de réalisation peut faire l'objet de nombreuses variantes d'exécution.

En particulier la façon d'obtenir un champ magnétique variable peut être réalisée à l'aide d'aimants permanents mobiles comme décrit ci-dessus, mais également à l'aide de moyens électromagnétiques à courant variable.

De même, on peut imaginer toutes sortes de moyens aptes à réaliser l'animation des mouvements relatifs de monte et baisse et de va et vient du cadre de transfert et de la paroi de maintien, ainsi que le mouvement de la plaque aimantée par rapport à la paroi de maintien, sans s'éloigner de l'esprit de l'invention.

## Revendications

1. Dispositif de fabrication de nappe de renfort N par assemblage de tronçons de bande coupés à angle, juxtaposés les uns aux autres par leurs lisières respectives, comprenant :
- un moyen d'alimentation (300) pour délivrer une bande (B) droit fil formée de fils métalliques parallèles entre eux et enrobés dans un mélange de caoutchouc,
- un tapis d'assemblage (101),
- un moyen de transfert (200) pour amener sur le tapis d'assemblage depuis le moyen d'alimentation une longueur donnée de bande droit fil selon une direction (AA') faisant un angle donné (α) avec la direction longitudinale (XX') du tapis d'assemblage (101), et comprenant une paroi de maintien (211), parallèle aux plans du tapis d'assemblage (101) et du moyen d'alimentation, et dont une première face (211a) est destinée à entrer en contact avec la surface de la bande,
- un moyen de coupe (400) pour détacher un tronçon de bande de la bande droit fil,
dans lequel le moyen d'alimentation (300), le moyen de transfert (200) et le tapis d'assemblage (101) sont dotés de moyens magnétiques (211, 102, 103, 104, 321, 322, 323, 324) aptes à maintenir ladite bande plaquée sur la surface respectivement du moyen d'alimentation, de la première face (211a) du moyen de transfert et du tapis d'assemblage,
**caractérisé en ce que** la paroi de maintien (211) est mobile selon un mouvement de monte et baisse et de va et vient par rapport aux plans formés par le tapis d'assemblage (101) et le moyen d'alimentation (320), et que les moyens magnétiques du moyen de transfert sont mobiles par rapport à la paroi de maintien (211) selon une direction perpendiculaire au plan formé par ladite paroi de maintien (211) entre une position haute et une position basse, et sont ajustés de sorte que, lorsque le dispositif est en fonctionnement :
- en position basse, lesdits moyens magnétiques du moyen de transfert (212) exercent au niveau des fils métalliques de la bande, un champ magnétique d'une valeur supérieure au champ magnétique exercé par les moyens magnétiques (102, 103, 104) disposés sur le moyen d'alimentation (300), lorsque les deux faces opposées de la bande sont simultanément en contact avec la première face (211a) de la paroi de maintien (211) d'une part et, avec la surface (320) du moyen d'alimentation (300) d'autre part et que,
- en position haute, lesdits moyens magnétiques du moyen de transfert (212) exercent au niveau des fils métalliques de la bande un champ magnétique d'une valeur inférieure au champ magnétique exercé par les moyens magnétiques (102, 103, 104) disposés sur le tapis d'assemblage (101), lorsque les deux faces opposées de la bande sont simultanément en contact avec la première face (211 a) de ladite paroi de maintien (211) d'une part et avec la surface du tapis d'assemblage (101) d'autre part.

2. Dispositif selon la revendication 1 dans lequel, les moyens magnétiques disposés sur le moyen d'alimentation (321, 322, 323, 324) et sur le tapis d'assemblage (102, 103, 104) exercent à la surface du moyen d'alimentation (320) et du tapis d'assemblage (101), un champ magnétique d'une valeur approximativement égale.

3. Dispositif selon l'une des revendications 1 ou 2 dans lequel, la paroi de maintien (211) est ajustée pour que, lorsque le dispositif est en fonctionnement, ladite paroi recouvre l'ensemble de la surface du tronçon de bande.

4. Dispositif selon l'une des revendication 1 à 3 dans lequel, la dite paroi de maintien (211) est formée d'un matériau non magnétique.

5. Dispositif selon l'une des revendications 1 à 4 dans lequel, une des extrémités (211c) de la paroi de maintien (211) sert de contre-lame à l'outil de coupe.

6. Dispositif selon l'une des revendications 1 à 5, dans lequel lesdits moyens magnétiques (102, 103, 104, 211, 321, 322, 323, 324), sont des éléments électromagnétiques ou des aimants permanents.

7. Dispositif selon l'une des revendications 1 à 6, dans lequel la surface destinée à recevoir les tronçons de bande du tapis d'assemblage (101) et la surface sur laquelle circule la bande sur le moyen d'alimentation (320) sont situés sensiblement dans un même plan.

8. Dispositif selon l'une des revendications 1 à 7, dans lequel le moyen de coupe (400) comprend un couteau rotatif.

9. Dispositif selon l'une des revendications 1 à 8, dans lequel le moyen de transfert (200) est monté sur une tourelle rotative (240) autour d'un axe (ZZ') perpendiculaire au plan formé par la surface du tapis d'assemblage (101).

10. Procédé de fabrication d'une nappe de renfort N par l'assemblage de tronçons de bande coupés à angle, juxtaposés les uns aux autres par leurs lisières respectives, à l'aide d'un dispositif selon la revendication 1, comprenant les étapes au cours desquelles :
- on ajuste la direction (AA') du moyen de transfert (200) et du moyen d'alimentation (300) selon un angle (α) donné par rapport à la direction longitudinale (XX') du tapis d'assemblage (101),
- on dispose le moyen de transfert (200) au droit du moyen d'alimentation (300),
- on abaisse simultanément la paroi de maintien (211) et les moyens magnétiques (212) disposés sur le moyen de transfert jusqu'à amener ladite première face (211 a) de la paroi de maintien (211) en contact avec la surface de la bande B, de manière à saisir l'extrémité de la bande disposée sur ledit moyen d'alimentation (300),
- on relève simultanément d'une même distance la paroi de maintien (211) et les moyens magnétiques (212) disposés sur le moyen de transfert,
- on translate l'extrémité de la bande au dessus du tapis d'assemblage (101),
- on abaisse la paroi de maintien (211) en direction du tapis d'assemblage (101), tout en éloignant les moyens magnétiques (212) disposés sur le moyen de transfert par rapport à la paroi de maintien (211), de sorte que le champ magnétique exercé sur la première face (211 a) de la paroi de maintien (211) diminue, jusqu'à plaquer ladite bande sur le tapis d'assemblage, de sorte que la lisière avant du tronçon de bande soit juxtaposée avec la lisière arrière de la nappe N en cours de fabrication,
- on active le moyen de coupe (400), de manière à former un tronçon de bande,
- on relève la paroi de maintien (211).

11. Procédé selon la revendication 10, dans lequel on maintien l'extrémité de la bande entre la première face (211a) de la paroi de maintien (211) et la surface du tapis (101) pendant l'étape au cours de laquelle on active le moyen de coupe (400).

## Patentansprüche

1. Vorrichtung zur Herstellung einer Verstärkungslage N durch Zusammenfügung von winklig geschnittenen Streifenabschnitten, die mit ihren Kanten aneinandergrenzend angeordnet werden, die enthält:
- eine Zufuhreinrichtung (300), um einen aus zueinander parallelen und in eine Kautschukmischung eingebetteten Metalldrähten geformten faserparallelen Streifen (B) zu liefern,
- ein Montageband (101),
- eine Übertragungseinrichtung (200), um von der Zufuhreinrichtung gemäß einer Richtung (AA') eine gegebene Länge eines faserparallelen Streifens auf das Montageband zu bringen, die einen gegebenen Winkel (α) mit der Längsrichtung (XX') des Montagebands (101) bildet, und die eine Haltewand (211) parallel zu den Ebenen des Montagebands (101) und der Zufuhreinrichtung enthält, und von der eine erste Seite (211a) dazu bestimmt ist, mit der Fläche des Streifens in Kontakt zu kommen,
- eine Schneideeinrichtung (400), um einen Streifenabschnitt vom faserparallelen Streifen zu lösen,
wobei die Zufuhreinrichtung (300), die Übertragungseinrichtung (200) und das Montageband (101) mit magnetischen Einrichtungen (211, 102, 103, 104, 321, 322, 323, 324) versehen sind, die den Streifen auf die Fläche der Zufuhreinrichtung, der ersten Seite (211a) der Übertragungseinrichtung bzw. des Montagebands gedrückt halten können,
**dadurch gekennzeichnet, dass** die Haltewand (211) gemäß einer Aufwärts- und Abwärts- und Hin- und Herbewegung bezüglich der vom Montageband (101) und von der Zufuhreinrichtung (320) geformten Ebenen beweglich ist, und dass die magnetischen Einrichtungen der Übertragungseinrichtung bezüglich der Haltewand (211) gemäß einer Richtung lotrecht zur von der Haltewand (211) geformten Ebene zwischen einer hohen und einer tiefen Stellung beweglich sind und so eingestellt werden, dass, wenn die Vorrichtung in Betrieb ist:
- in der tiefen Stellung die magnetischen Einrichtungen der Übertragungseinrichtung (212) im Bereich der Metalldrähte des Streifens ein Magnetfeld von höherem Wert als das von den auf der Zufuhreinrichtung (300) angeordneten magnetischen Einrichtungen (102, 103, 104) ausgebildete Magnetfeld ausbilden, wenn die zwei gegenüberliegenden Seiten des Streifens gleichzeitig mit der ersten Seite (211a) der Haltewand (211) einerseits und mit der Fläche (320) der Zufuhreinrichtung (300) andererseits in Kontakt sind, und dass
- in der hohen Stellung die magnetischen Einrichtungen der Übertragungseinrichtung (212) im Bereich der Metalldrähte des Streifens ein Magnetfeld von niedrigerem Wert als das von den auf dem Montageband (101) angeordneten magnetischen Einrichtungen (102, 103, 104) ausgebildete Magnetfeld ausbilden, wenn die zwei gegenüberliegenden Seiten des Streifens gleichzeitig mit der ersten Seite (211a) der Haltewand (211) einerseits und mit der Fläche des Montagebands (101) andererseits in Kontakt sind.

2. Vorrichtung nach Anspruch 1, wobei die auf der Zufuhreinrichtung (321, 322, 323, 324) und auf dem Montageband (102, 103, 104) angeordneten magnetischen Einrichtungen an der Oberfläche der Zufuhreinrichtung (320) und des Montagebands (101) ein Magnetfeld von in etwa gleichem Wert ausbilden.

3. Vorrichtung nach einem der Ansprüche 1 oder 2, wobei die Haltewand (211) so eingestellt ist, dass, wenn die Vorrichtung in Betrieb ist, die Wand die Gesamtheit der Fläche des Streifenabschnitts bedeckt.

4. Vorrichtung nach einem der Ansprüche 1 bis 3, wobei die Haltewand (211) aus einem nicht magnetischen Material geformt ist.

5. Vorrichtung nach einem der Ansprüche 1 bis 4, wobei eines der Enden (211c) der Haltewand (211) als Gegenschneide für das Schneidewerkzeug dient.

6. Vorrichtung nach einem der Ansprüche 1 bis 5, wobei die magnetischen Einrichtungen (102, 103, 104, 211, 321, 322, 323, 324) elektromagnetische Elemente oder Dauermagnete sind.

7. Vorrichtung nach einem der Ansprüche 1 bis 6, wobei die Fläche, die dazu bestimmt ist, die Streifenabschnitte vom Montageband (101) zu empfangen, und die Fläche, auf der der Streifen auf der Zufuhreinrichtung (320) umläuft, sich im Wesentlichen in der gleichen Ebene befinden.

8. Vorrichtung nach einem der Ansprüche 1 bis 7, wobei die Schneideeinrichtung (400) ein drehendes Messer enthält.

9. Vorrichtung nach einem der Ansprüche 1 bis 8, wobei die Übertragungseinrichtung (200) auf einen um eine Achse (ZZ') lotrecht zur von der Fläche des Montagebands (101) gebildeten Ebene drehenden Turm (240) montiert ist.

10. Verfahren zur Herstellung einer Verstärkungslage N durch Zusammenfügung von winklig geschnittenen Streifenabschnitten, die mit ihren Kanten aneinandergrenzend angeordnet werden, mit Hilfe einer Vorrichtung nach Anspruch 1, das die Schritte enthält, während denen:
- die Richtung (AA') der Übertragungseinrichtung (200) und der Zufuhreinrichtung (300) gemäß einem gegebenen Winkel (α) bezüglich der Längsrichtung (XX') des Montagebands (101) eingestellt wird,
- die Übertragungseinrichtung (200) im rechten Winkel vor der Zufuhreinrichtung (300) angeordnet wird,
- die Haltewand (211) und die auf der Übertragungseinrichtung angeordneten magnetischen Einrichtungen (212) gleichzeitig abgesenkt werden, bis die erste Seite (211a) der Haltewand (211) mit der Oberfläche des Streifens B in Kontakt gebracht wird, um das Ende des auf der Zufuhreinrichtung (300) angeordneten Streifens zu ergreifen,
- die Haltewand (211) und die auf der Übertragungseinrichtung angeordneten magnetischen Einrichtungen (212) gleichzeitig um die gleiche Strecke angehoben werden,
- das Ende des Streifens über dem Montageband (101) translationsverschoben wird,
- die Haltewand (211) in Richtung des Montagebands (101) abgesenkt wird, während gleichzeitig die auf der Übertragungseinrichtung angeordneten magnetischen Einrichtungen (212) bezüglich der Haltewand (211) entfernt werden, so dass das auf der ersten Seite (211a) der Haltewand (211) ausgebildete Magnetfeld abnimmt, bis der Streifen auf das Montageband gedrückt wird, so dass die Vorderkante des Streifenabschnitts an die Hinterkante der in Herstellung befindlichen Lage N angrenzt,
- die Schneideeinrichtung (400) aktiviert wird, um einen Streifenabschnitt zu formen,
- die Haltewand (211) angehoben wird.

11. Verfahren nach Anspruch 10, wobei das Ende des Streifens zwischen der ersten Seite (211a) der Haltewand (211) und der Oberfläche des Bands (101) während des Schritts gehalten wird, während dem die Schneideeinrichtung (400) aktiviert wird.

## Claims

1. Device for manufacturing a reinforcing ply N by assembling lengths of strip cut at an angle, and juxtaposed with one another via their respective selvedges, comprising:
- a feed means (300) for delivering a straight-grain strip (B) formed of mutually parallel metallic threads coated in a rubber compound,
- an assembly belt (101),
- a transfer means (200) for conveying onto the assembly belt from the feed means a given length of straight-grain strip in a direction (AA') that makes a given angle (α) with the longitudinal direction (XX') of the assembly belt (101), and comprising a retaining wall (211), parallel to the planes of the assembly belt (101) and of the feed means, and a first face (211a) of which is intended to come into contact with the surface of the strip,
- a cutting means (400) for detaching a length of strip from the straight-grain strip, in which device the feed means (300), the transfer means (200) and the assembly belt (101) are fitted with magnetic means (211, 102, 103, 104, 321, 322, 323, 324) able to keep the said strip pressed firmly against the surface of the feed means, of the first face (211 a) of the transfer means, and of the assembly belt, respectively, **characterized in that** the retaining wall (211) is able to move up and down and back and forth with respect to the planes formed by the assembly belt (101) and the feed means (320), and **in that** the magnetic means of the transfer means are able to move with respect to the retaining wall (211) in a direction perpendicular to the plane formed by the said retaining wall (211) between a raised position and a lowered position, and are adjusted so that, when the device is in operation:
- in the lowered position, the said magnetic means of the transfer means (212) exert on the metallic threads of the strip a magnetic field of a strength higher than the strength of the magnetic field exerted by the magnetic means (102, 103, 104) positioned on the feed means (300), when the two opposite faces of the strip are simultaneously in contact with the first face (211 a) of the retaining wall (211) on the one hand, and with the surface (320) of the feed means (300) on the other hand, and such that
- in the raised position, the said magnetic means of the transfer means (212) exert on the metallic threads of the strip a magnetic field of a strength weaker than the strength of the magnetic field exerted by the magnetic means (102, 103, 104) positioned on the assembly belt (101), where the two opposite faces of the strip are simultaneously in contact with the first face (211a) of the said retaining wall (211) on the one hand, and with the surface of the assembly belt (101) on the other hand.

2. Device according to Claim 1, in which the magnetic means positioned on the feed means (321, 322, 323, 324) and on the assembly belt (102, 103, 104) exert on the surface of the feed means (320) and of the assembly belt (101), a magnetic field of approximately equal strength.

3. Device according to either of Claims 1 and 2, in which the retaining wall (211) is adjusted so that when the device is in operation, the said wall covers the entire surface of the length of strip.

4. Device according to one of Claims 1 to 3, in which the said retaining wall (211) is made of a nonmagnetic material.

5. Device according to one of Claims 1 to 4, in which one of the ends (211 c) of the retaining wall (211) acts as an anvil for the cutting tool.

6. Device according to one of Claims 1 to 5, in which the said magnetic means (102, 103, 104, 211, 321, 322, 323, 324) are electromagnetic elements or permanent magnets.

7. Device according to one of Claims 1 to 6, in which the surface intended to receive the lengths of strip of the assembly belt (101) and the surface over which the strip travels on the feed means (320) lie substantially in one and the same plane.

8. Device according to one of Claims 1 to 7, in which the cutting means (400) comprises a rotary cutter.

9. Device according to one of Claims 1 to 8, in which the transfer means (200) is mounted on a rotary turret (240) able to rotate about an axis (ZZ') perpendicular to the plane formed by the surface of the assembly belt (101).

10. Method of manufacturing a reinforcing ply N by assembling lengths of strip cut at an angle, juxtaposed with one another via their respective selvedges, using a device according to Claim 1, comprising the steps during which:
- the direction (AA') of the transfer means (200) and of the feed means (300) are set to a given angle (α) with respect to the longitudinal direction (XX') of the assembly belt (101),
- the transfer means (200) is brought into line with the feed means (300),
- the retaining wall (211) and the magnetic means (212) positioned on the transfer means are simultaneously lowered until the said first face (211 a) of the retaining wall (211) comes into contact with the surface of the strip B, so as to grasp the end of the strip positioned on the said feed means (300),
- the retaining wall (211) and the magnetic means (212) positioned on the transfer means are simultaneously raised through the same distance,
- the end of the strip is made to undergo a translational movement over the assembly belt (101),
- the retaining wall (211) is lowered towards the assembly belt (101) while at the same time moving the magnetic means (212) positioned on the transfer means away from the retaining wall (211) so that the magnetic field exerted on the first face (211 a) of the retaining wall (211) weakens until the said strip is pressed firmly against the assembly belt so that the front selvedge of the length of strip is juxtaposed with the rear selvedge of the ply N that is in the process of being manufactured,
- the cutting means (400) is activated to form a length of strip,
- the retaining wall (211) is raised.

11. Method according to Claim 10 in which the end of the strip is kept between the first face (211 a) of the retaining wall (211) and the surface of the belt (101) during the step in which the cutting means (400) is activated.
